# EUROPEAN PATENT SPECIFICATION

(11) **EP 3 267 576 B1**
(45) Date of publication and mention of the grant of the patent: **24.08.2022**
(21) Application number: 17177100.9
(22) Date of filing: 21.06.2017
(51) Int. Cl.: H02P 9/00, H02P 9/08, H02P 1/26

(54) **CONTROLLER AND GENERATOR-MOTOR STARTING METHOD**
STEUERGERÄT UND VERFAHREN ZUM ANLASSEN EINES GENERATORMOTORS
CONTRÔLEUR ET PROCÉDÉ DE DÉMARRAGE DE MOTEUR GÉNÉRATEUR

(30) Priority: 05.07.2016 JP 2016133331
(43) Date of publication of application: 10.01.2018
(73) Proprietor: Kabushiki Kaisha Toshiba, Minato-ku Tokyo 105-8001 (JP)
(72) Inventor: Ishizuki, Teruyuki, Tokyo 105-8001 (JP); Kageyama, Takahisa, Tokyo 105-8001 (JP)
(74) Representative: Hoffmann Eitle

(56) References cited:
- WO-A1-2004/079891
- WO-A1-2010/045964
- US-A1- 2014 062 425
- JORG JANNING ET AL: "Next generation variable speed pump-storage power stations", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-10, XP031541410, ISBN: 978-1-4244-4432-8
- RAJESH SAIJU ET AL: "Dynamic analysis of start-up strategies of AC excited Double Fed Induction Machine for pumped storage power plant", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-8, XP031541605, ISBN: 978-1-4244-4432-8

## Description

Embodiments described herein relate to a controller and a generator-motor starting method for controlling the starting of a generator-motor, for example, in a pumped storage power plant.

According to a generally-used method of starting pumping operations, a static starter equipped with a frequency converter including a semiconductor element is used for starting of a generator-motor at a large-capacity pumped storage power plant. This starter is used to accelerate the generator-motor to a rated rotating speed from the standstill state to synchronize a generator-motor terminal voltage with a system voltage, and then the generator-motor is connected in parallel with a grid system by a parallel-in breaker. A thyristor starter is known as such kind of static starter. The output of the starter of this type is as high as 20 MW, and there are demands to reduce its costs and installation space.

In an environment marked by the recent countermeasures against global warming, there are increasing cases where a doubly-fed generator-motor (hereinafter referred to as a "variable-speed generator-motor") is applied to a variable-speed pumped storage power plant. When a large-capacity variable-speed generator-motor is applied to a variable-speed pumped storage power plant, a frequency converter (hereinafter may be referred to as a "secondary exciter") having an output of more than 20 MW may be used for an exciter connected to the rotor winding (secondary winding) of the variable-speed generator-motor. Some variable-speed pumped storage power plants use a method (hereinafter referred to as a "self-starting method [secondary side]") of accelerating the variable-speed generator-motor to the proximity of a synchronous speed from a standstill state by injecting variable-frequency driving electricity into the generator-motor from a secondary winding thereof, using the "secondary exciter" as a starter, without additionally installing the above-mentioned thyristor starter.

Due to the higher head and higher capacity of the recent variable-speed pumped storage power plant, a variable-speed operation range that is selected has decreased to about ±4% from a conventional range of about ±5 to 7%. Therefore, an output frequency range and an output voltage range required for the frequency converter are also reduced in proportion to the variable-speed operation range; as a result, even if the secondary exciter is connected to the secondary winding of the variable-speed generator-motor and used as a starter to supply driving electricity as has been conventionally implemented until now, the variable-speed generator-motor cannot be started up to even the target speed that enables synchronization and parallel connection with the grid system due to a low output voltage.

In order to address such a problem, the following methods may be applied: a first method (static starter method) in which the static starter is additionally installed as described above; a second method in which a set of large-current branch circuit buses, disconnectors, and the like are provided, so that the main circuits are switched to inject driving electricity from the starter winding (primary winding) of the generator-motor (self-starting method [primary side]) at its starting; and a third method in which a start-up transformer, a set of large-current branch circuit buses, and disconnectors that are only used at the start are provided on the secondary winding circuit side, so that a secondary voltage at the start is started up, and necessary driving electricity is injected from the secondary winding circuit side (self-starting method [with a secondary start-up transformer]). In each case, large-sized equipment shall be additionally installed. This leads to increased equipment costs, a complicated layout design of a power plant, and the increase in size and engineering costs of a building.

Under such circumstances, it is desired to provide a controller and a generator-motor starting method whereby when a generator-motor is started by a secondary exciter, the generator-motor can be started up to a target speed without increases in equipment size and costs, regardless of the higher head and higher capacity of a pumped storage power plant.

US 2014 062425 relates to systems and methods for interfacing variable speed generators to a power distribution grid. A plurality of doubly-fed induction generators (DFIG) are provided and coupled to a common shaft of a prime mover. Each of the plurality of DFIGs provides an electrical power output having an output frequency based on a rotational speed of the common shaft. A converter coupled to each DFIG provides variable excitation signals to its respective DFIG sufficient to adjust its output frequency to conform to a power grid frequency requirement.

JORG JANNING ET AL: "Next generation variable speed pump-storage power stations", 8 September 2009, relates to a drive system of a variable speed pump-storage power station consisting of a doubly-fed induction machine with a 3-level voltage source inverter feeding the rotor

The object of the invention is achieved by the subject-matter of the independent claims. Advantageous embodiments are defined in the dependent claims. Further examples are provided for facilitating the understanding of the invention.

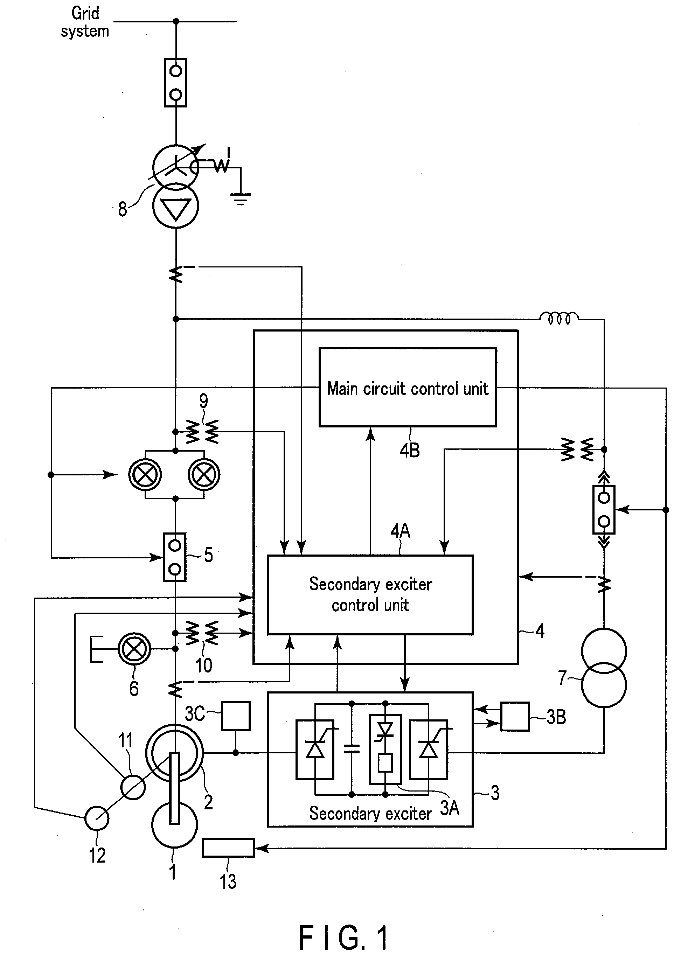

According to an example useful for understanding the invention, there is provided a controller for performing control to supply driving electricity to a secondary winding of a generator-motor from a secondary exciter and thereby start The controller includes a setting change unit configured to change or cancel, for starting the generator-motor, at least one of a setting of a direct-current circuit voltage of the secondary exciter and a setting of control or protection preset for the direct-current circuit voltage or an output voltage of the secondary exciter. The invention can be more fully understood from the following detailed description when taken in conjunction with the accompanying drawings, in which: FIG. 1 is a diagram showing a configuration of a variable-speed pumped storage system according to an embodiment;
FIG. 2 is a diagram showing a configuration example of a three-phase short-circuit device 3C;
FIG. 3 is a diagram showing a functional configuration example of a secondary exciter control unit 4A;
FIG. 4 is a diagram showing some setting-change examples of changing or canceling, for starting the variable-speed generator-motor 2, a setting of a direct-current circuit voltage of the secondary exciter 3 and a setting of control or protection preset for the direct-current circuit voltage or an output voltage of the secondary exciter 3;
FIG. 5 is a drawing showing the relationship between a rotating speed during the starting of the variable-speed generator-motor 2 and an output voltage from the secondary exciter 3, using a comparison between the embodiment and the conventional art;
FIG. 6 is a drawing showing the relationship between the time and the rotating speed of the secondary exciter 3 when the variable-speed generator-motor 2 is being activated, using a comparison between the embodiment and the conventional art; and
FIG. 7 is a flowchart showing an example of the operation by a controller.

Embodiments will be described below with reference to the drawings.

FIG. 1 is a block diagram showing the basic configuration of a variable-speed pumped storage system according to an embodiment.

The variable-speed pumped storage system includes the following as the main elements: a pump turbine 1; a variable-speed generator-motor 2 configured by a doubly-fed alternator; a self-excitation secondary exciter 3 which is connected to a secondary winding of the variable-speed generator-motor 2 and is configured by a frequency converter which applies an alternating current having a variable frequency to the variable-speed generator-motor 2; a controller 4 which includes a secondary exciter control unit 4A (which controls the output of alternating voltage, current, frequency, and phase angle of the secondary exciter 3) and a main circuit control unit 4B (which controls the open/close of the circuit breaker 5 and disconnector 6, and controls the operation of the water depressing system 13); a parallel-in breaker 5 for a connection of the variable-speed generator-motor 2 to a grid system; a starting disconnector 6 which causes three-phase short-circuiting at the stator winding terminal of the variable-speed generator-motor 2; an excitation transformer 7 which serves as a power transformer for the secondary exciter 3; a main transformer 8 which is connected to the grid system via a breaker; an instrument transformer 9 which measures a system side voltage; an instrument transformer 10 which measures a terminal voltage of the variable-speed generator motor 2; a speed detector 11 which detects the RPM or the rotating speed (which may be hereinafter abbreviated as "speed") of a rotor of the variable-speed generator-motor 2; a phase detector 12 which detects the phase angle of the rotor of the variable-speed generator-motor 2; and a water depressing system 13 which depresses the water level at the start of pumping.

The aforementioned controller 4 has a function of performing control to start the variable-speed generator-motor 2 from a standstill state by supplying driving power from the secondary exciter 3 to the secondary winding of the variable-speed generator-motor 2.

The present variable-speed pumped storage system is provided with a chopper 3A (an overvoltage suppression device), a converter overvoltage protection/stop device 3B, and a three-phase short-circuit device 3C (an overvoltage protection device) to protect circuitry including the secondary exciter 3 from an overvoltage induced in the secondary side of the variable-speed generator-motor 2 due to a fault or lightening that occurs in a system. The operations of these devices are controlled to carry out operations and, if necessary, recovery based on preset values so that other devices are protected and to operate operations are continued after a system fault. There are cases where the relevant control is carried out by the following: (i) the secondary exciter control unit 4A, (ii) each of the chopper 3A, the converter overvoltage protection/stop device 3B, and the three-phase short-circuit device 3C (in other words, each of the protection control devices), or (iii) each of the secondary exciter control unit 4A, the chopper 3A, the converter overvoltage protection/stop device 3B, and the three-phase short-circuit device 3C (in other words, these unit and devices in cooperation). Each of the converter overvoltage protection/stop device 3B and the three-phase short-circuit device 3C may be disposed outside of the secondary exciter 3 as shown in FIG. 1, or may be disposed inside of the secondary exciter 3.

The chopper 3A is provided inside of the secondary exciter 3. The chopper 3A is constituted by resistors and power semiconductor elements (e.g., GTO, IGBT), and has a function of suppressing voltage increase in a direct-current link circuit in order to continue the operation of the converter/inverter when, for example, the grid system fault occurs with a relatively-small failure current induced in the secondary winding of the variable-speed generator-motor 2.

The converter overvoltage protection/stop device 3B has a function of stopping the operation of the frequency converter (i.e., a gate block that stops the operation of the inverter/converter) when a voltage of the direct-current link circuit in the secondary exciter 3 reaches a certain voltage level that exceeds the voltage suppression capability of the chopper 3A, and also plays a role to protect semiconductor elements of the frequency converter from the operation at a voltage exceeding an overload tolerance of the on/off operation, to stop the frequency converter before the operation of the later-described three-phase short-circuit device 3C which operates when the voltage is further increased, and to prevent the frequency converter from supplying a short-circuit current via the three-phase short-circuit device 3C.

The three-phase short-circuit device 3C is connected to a three-phase alternating-current circuit between the secondary winding of the variable-speed generator-motor 2 and the secondary exciter 3. This three-phase short-circuit device 3C causes three-phase short circuiting in the three-phase alternating-current circuit while the frequency converter is being stopped, when an overvoltage exceeding a certain voltage level is generated in the three-phase alternating-current circuit or the direct-current link circuit in the secondary exciter 3.

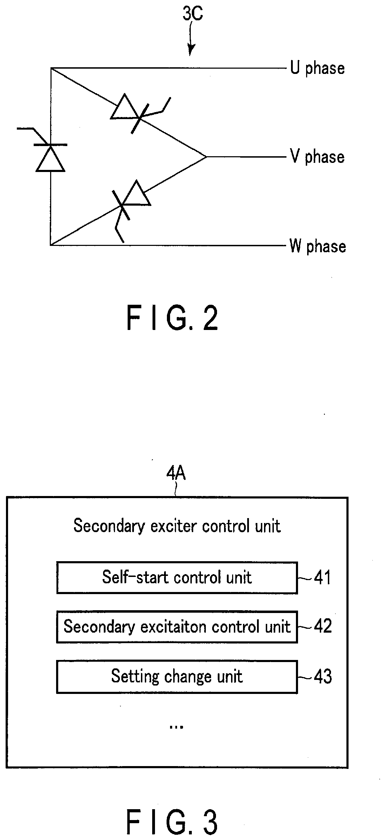

Specifically, the three-phase short-circuit device 3C is electrically connected to an excitation power supply line connecting the secondary winding of the variable-speed generator-motor 2 and the secondary exciter 3, and three short-circuit switches are configured by separated excited devices, such as thyristors etc., as shown in FIG. 2. FIG. 2 shows an example in which one thyristor is provided respectively between U phase and V phase, V phase and W phase, and W phase and U phase, but the embodiment is not limited to this example.

FIG. 3 is a diagram showing a functional configuration example of the secondary exciter control unit 4A.

The secondary exciter control unit 4A includes various functions, such as a self-start control unit 41, a secondary excitation control unit 42, and a setting change unit 43, and the like.

The self-start control unit 41 has a function of executing a control mode that uses the secondary exciter 3 as a starter to start the variable-speed generator-motor 2 (and the pump turbine 1) (hereinafter referred to as a "self-start control mode"). When the self-start control mode is set, a control signal corresponding to the self-start control mode is sent to the secondary exciter 3. This control signal gradually increases the output frequency of the secondary exciter 3 (the frequency converter) from 0 Hz to the proximity of a system frequency.

The secondary excitation control unit 42 has a function of executing a control mode to control variable-speed operation through the secondary exciter 3 (hereinafter referred to as a "secondary excitation control mode") during and after the parallel connection of the variable-speed generator-motor 2 with the grid system. When the secondary excitation control mode is set, a control signal is sent to the secondary exciter 3.

The setting change unit 43 has a function of changing or canceling, for starting the variable-speed generator-motor 2, at least one of a direct-current circuit voltage of the secondary exciter 3 and a setting of control or protection preset for the direct-current circuit voltage or an output voltage of the secondary exciter 3.

Herein, "a setting of control or protection preset" means set values for carrying out control or protection while the generator-motor is being connected to the grid system during an ordinary operation, and such values are determined with consideration of operation conditions, for example a condition that the generator motor should continue operating even when a system fault occurs. A target for such "change" is, for example, a set value of the direct-current circuit voltage of the secondary exciter 3 and, depending on a case, each of the set values such as a voltage level for causing the chopper 3A to operate, a voltage level for causing the frequency converter to stop for overvoltage protection, and a voltage level for causing the three-phase short-circuit device 3C to operate, etc. A target for such "cancel" is, for example, a set value of a voltage level for causing the chopper 3A to operate.

The setting change unit 43 further has a function of, for connecting the variable-speed generator-motor 2 in parallel with the grid system, returning to the original state where the setting of the direct-current circuit voltage of the secondary exciter 3 and the setting of the control or protection preset for the direct-current circuit voltage or the output voltage of the secondary exciter 3 are originally set, from a state where the at least one of the direct-current circuit voltage of the secondary exciter 3 and the setting of the control or protection preset for the direct-current circuit voltage or the output voltage of the secondary exciter 3 are changed or canceled.

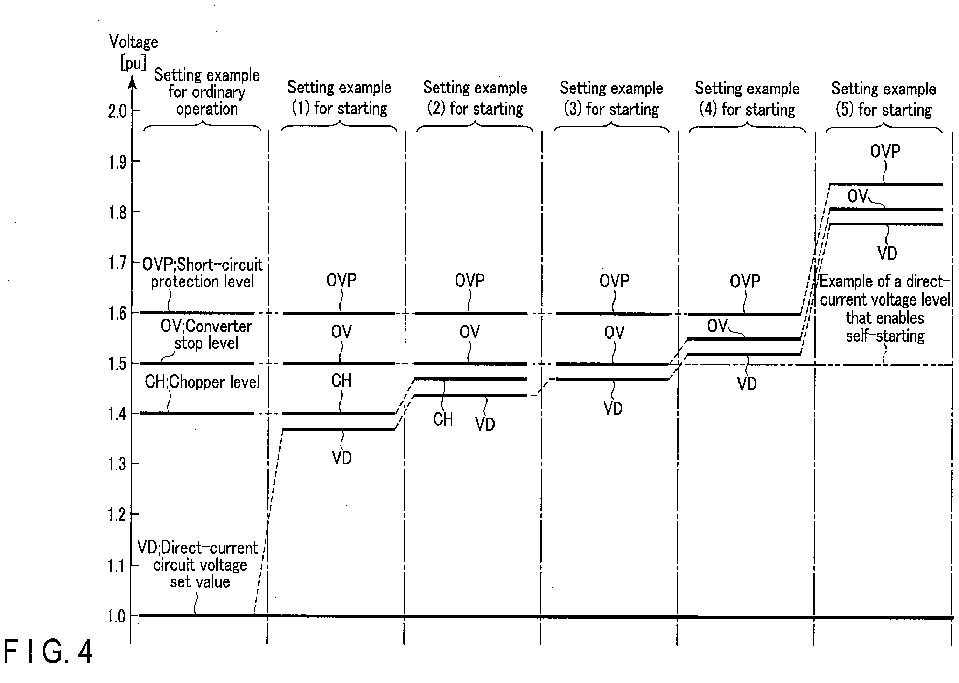

Next, with reference to FIG. 4, some setting-change examples of changing or canceling, for starting the variable-speed generator-motor 2, a setting of control or protection for an output voltage of the secondary exciter 3 will be explained along with comparisons with a setting example for an ordinary operation.

Herein, a direct-current circuit voltage of the secondary exciter 3 during an ordinary operation is called VD, a voltage level for causing the chopper 3A to operate is called "chopper level CH", a voltage level for causing the frequency converter to stop for overvoltage protection is called "converter stop level OV", and a voltage level for causing the three-phase short-circuit device 3C to operate is called "short circuit protection level OVP".

In the present variable-speed pumped storage system, assuming induction of an overvoltage in the secondary side of the variable-speed generator-motor 2 due to a fault or lightning that occurs in a system during an ordinary operation, various circuit protection measures are taken in accordance with levels of the overvoltage. For example, set values respectively defining a direct-current circuit voltage VD, a chopper level CH, a converter stop level OV, and a short circuit protection level OVP are preset in the secondary exciter 3. Generally, these set values remain unchanged during an ordinary operation or during the starting; however, in the present embodiment, at least some of the set values are changed or canceled when the starting is carried out.

### • Setting Example for Ordinary Operation

During an ordinary operation of the variable-speed generator-motor 2, the setting change unit 43 applies the preset values as-is for the direct-current circuit voltage VD, the chopper level CH, the converter stop level OV, and the short circuit protection level OVP. For example, as shown in FIG. 4, the direct-current circuit voltage VD is 1.0 [pu] (= 4.5 kV), the chopper level CH is 1.4 [pu], the converter stop level OV is 1.5 [pu], and the short circuit protection level OVP is 1.6 [pu].

### • Setting Example (1) for Starting

In the setting example (1), for starting the variable-speed generator-motor 2, the setting change unit 43 changes a set value which is preset as the direct-current circuit voltage VD to a value higher than this set value and lower than a set value of a voltage for causing the chopper 3A of the secondary exciter 3 to operate.

For example, as shown in FIG. 4, the set value of the starting-enabling level VD is increased to a voltage level slightly before the set value of the chopper level CH (1.4 [pu]).

According to this setting example (1), if there is a certain difference between the preset direct-current circuit voltage VD and chopper level CH, a maximum speed that is finally reached by the variable-speed generator-motor 2 can be increased only by carrying out a setting change to increase the direct-current circuit voltage VD during the starting. Thus, there may be a case where the variable-speed generator-motor 2 can be started-up to a target speed that enables the synchronous parallel connection to a system.

The reason why such setting change can be carried out is that there is no need of maintaining a difference between the chopper level that may be set for operation control at the time of system fault and a relatively-large set voltage for the direct-current circuit voltage because the generator-motor is not connected to the grid system during the starting.

### • Setting Example (2) for Starting

In the setting example (2), for starting the variable-speed generator-motor 2, the setting change unit 43 changes the set value which is preset as the chopper level CH to a value higher than this set value and lower than a set value of a voltage level for causing the frequency converter to stop, and changes the set value which is preset as the current circuit voltage VD to a value higher than this set value and lower than the set value of the chopper level CH.

For example, as shown in FIG. 4, the set value of the chopper level CH is increased to a voltage level slightly before the set value of the converter stop level OV, i.e., 1.5 [pu], and the set value of the starting-enabling level VD is increased to a voltage level slightly before the set value of the chopper level CH.

According to this setting example (2), since the direct-current circuit voltage VD during the starting can be set higher than that in the setting example (1), the maximum speed that can finally be reached by the variable-speed generator-motor 2 can be made higher than that in the setting example (1). Thus, even when the variable-speed generator-motor 2 cannot be started up at the target speed that enables a synchronous parallel connection to a system in the setting example (1), such target speed may be realized in the setting example (2).

### • Setting Example (3) for Starting

In the setting example (3), for starting the variable-speed generator-motor 2, the setting change unit 43 invalidates the set value which is preset as the chopper level CH (in other words, disables the operation of the chopper 3A), and changes the set value which is preset as the direct-current circuit voltage VD to a value higher than this set value and lower than the set value of the converter stop level OV.

For example, as shown in FIG. 4, the set value of the chopper level CH is canceled, and the set value of the direct-current circuit voltage VD is increased to a voltage level slightly before the set value of the converter stop level OV (1.5 [pu]).

According to this setting example (3), since the direct-current circuit voltage VD during the starting can be set higher than that in the setting example (2), the maximum speed that can finally be reached by the variable-speed generator-motor 2 can be made higher than that in the setting example (2). Thus, even when the variable-speed generator-motor 2 cannot be started up at the target speed that enables a synchronous parallel connection to a system in the setting example (2), such target speed may be realized in the setting example (3).

The reason why such setting change can be carried out is that, although the role of the chopper 3A is to suppress the increase of the direct-current circuit voltage due to a fault current at the time of a system fault, the voltage control capability of the frequency converter allows stable operation without a chopper 3A during the starting while the variable-speed generator-motor 2 is not being connected to the grid system.

### • Setting Example (4) for Starting

In the setting example (4), for starting the variable-speed generator-motor 2, the setting change unit 43 invalidates the set value which is preset as the chopper level CH (in other words, disables the operation of the chopper), changes the set value which is preset as the converter stop level OV to a value higher than this set value and lower than the set value of the short circuit protection level OVP, and changes the set value which is preset as the direct-current circuit voltage VD to a value higher than this set value and lower than the set value of the converter stop level OV.

For example, as shown in FIG. 4, the setting of the chopper level CH is canceled, the set value of the converter stop level OV is increased to a voltage level slightly before the set value of the short circuit protection level OVP, i.e., 1.6 [pu], and the set value of the direct-current circuit voltage VD is increased to a voltage level slightly before the set value of the converter stop level OV.

According to this setting example (4), since the direct-current circuit voltage VD during the starting can be set higher than that in the setting example (3), the maximum speed that can finally be reached by the variable-speed generator-motor 2 can be made higher than that in the setting example (3). Thus, even when the variable-speed generator-motor 3 cannot be started up at the target speed that enables a synchronous parallel connection to a system in the setting example (2), such target speed may be realized in the setting example (4).

The converter stop level OV is set below an operation-enabling voltage of the semiconductor elements of the frequency converter; however, its level needs to be lower than the operating level of the three-phase short-circuit device 3C that operates when a large fault current flows. For operation control during a system fault, the operation set value for the three-phase short-circuit device 3C may be set lower than a value determined by the voltage capacity of the devices; in this case, the OV level is also set lower. The set values can be increased up to the values determined by the device capability during the starting while a connection to the grid system is not achieved.

### • Setting Example (5) for Starting

In the setting example (5), for starting the variable-speed generator-motor 2, the setting change unit 43 invalidates the set value which is preset as the chopper level CH (in other words, disables the operation of the chopper), changes the set value which is preset as the short circuit protection level OVP to a value higher than this set value and lower than the upper limit of the capable voltage level of the secondary winding of the variable-speed generator-motor 2, and lower than the upper limit of the withstand voltage level of the frequency converter itself of the secondary exciter 3, changes the set value which is preset as the converter stop level OV to a value higher than this set value and lower than the set value of the short circuit protection level OVP, and changes the set value which is preset as the direct-current circuit voltage VD to a value higher than this set value and lower than the set value of the converter stop level OV.

For example, as shown in FIG. 4, the setting of the chopper level CH is canceled, the set value of the short circuit protection level OVP is increased to the proximity of the upper limit of the withstand voltage level of the frequency converter alone, the set value of the converter stop level OV is increased to a voltage level slightly before the set value of the short circuit protection level OVP, and the set value of the direct-current circuit voltage VD is increased to a voltage level slightly before the set value of the converter stop level OV.

According to this setting example (5), since the direct-current circuit voltage VD during the starting can be set higher than that in the setting example (4), the maximum speed that can finally be reached by the variable-speed generator-motor 2 can be made higher than that in the setting example (4). Thus, even when the variable-speed generator-motor 4 cannot be started up at the target speed that enables a synchronous parallel connection to a system in the setting example (4), such target speed may be realized in the setting example (5).

As described in the setting example (4), the short circuit protection level OVP needs to be set lower than a protection level of devices for operation control during the connection to the grid system, and in this case, the OVP can be increased up to the capable voltage level of a device during starting while the connection to the grid system is not achieved.

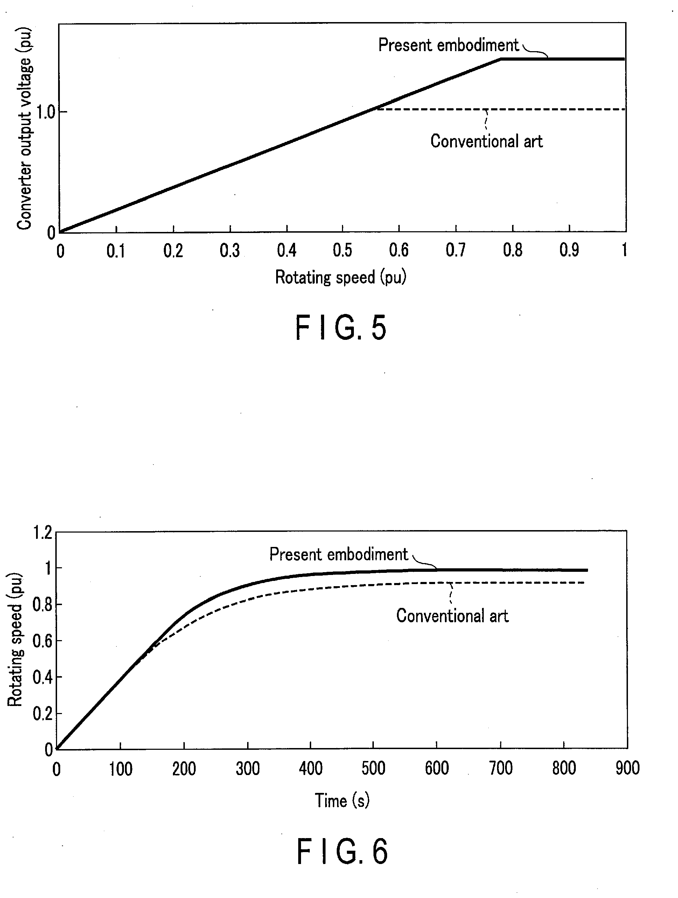

FIG. 5 is a drawing showing the relationship between the rotating speed during the starting of the variable-speed generator-motor 2 and the output voltage from the secondary exciter 3, using a comparison between the present embodiment and the conventional art.

In conventional art, the above-mentioned set value of the direct-current circuit voltage VD during the starting remains the same as in the time during an ordinary operation. In the present example, suppose the set value of the direct-current circuit voltage VD is 1.0 [pu] (= 4.5 kV). When the variable-speed generator-motor 2 is started from the standstill state, if the rotating speed is increased as the output voltage of the secondary exciter 3 is increased from 0 [pu], the increase of the output voltage of the secondary exciter 3 is restricted by a maximum value (herein, the value is set at 1.0 [pu] of the output voltage) determined by the set value of the direct-current circuit voltage VD during an ordinary operation; as a consequence, the output voltage of the secondary exciter 3 will not exceed the maximum value regardless of the increase of the rotating speed.

On the other hand, in the present embodiment, the set value of the aforementioned starting-enabling level VD is higher than the set value set during an ordinary operation. To start the variable-speed generator-motor 2 from the standstill state, if the rotating speed is increased as the output voltage of the secondary exciter 3 is being increased from 0 [pu], the increase of the output voltage of the secondary exciter 3 is not restricted at the set value of the starting-enabling level VD (1.0 [pu]) in a conventional example, and can be increased up to, for example, 1.5 [pu] after exceeding 1.0 [pu]. As the starting torque is increased by the square of a voltage, the reachable rotating speed is increased.

FIG. 6 is a drawing showing the relationship between the time and the rotating speed of the secondary exciter 3 during the starting of the variable-speed generator-motor 2, using a comparison between the present embodiment and the conventional art.

In conventional art, as described above, when the rotating speed is increased as the output voltage of the secondary exciter 3 is being increased from 0 [pu], the increase of the output voltage of the secondary exciter 3 is restricted by a value determined by the set value of the direct-current circuit voltage VD during an ordinary operation (i.e., the output voltage 1.0 [pu]); as a result, the rotating speed may be increased but does not come close to the rated rotating speed (1.0 [pu]), and is saturated in the proximity of a level of 90% of the rated rotating speed (1.0 [pu]).

On the other hand, in the present embodiment, if the rotating speed is increased as the output voltage of the secondary exciter 3 is being increased from 0 [pu], the output voltage of the secondary exciter 3 reaches a higher level, for example 1.5 [pu]. As a result, the acceleration is achieved earlier than in conventional art, and the rotating speed reaches the proximity of the rated rotating speed (1.0 [pu]), thereby enabling a synchronous parallel connection to a system.

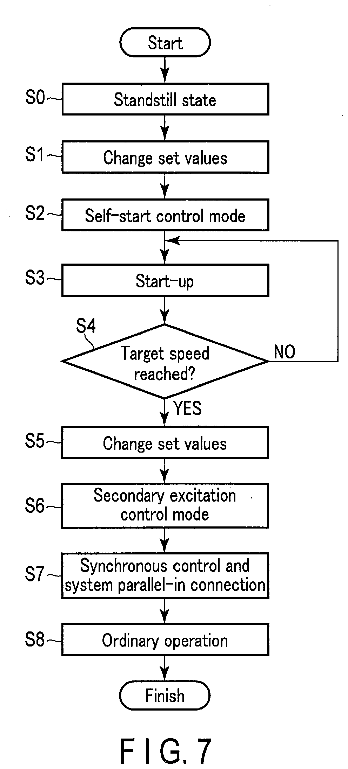

Next, the operation of starting the variable-speed generator-motor 2 by the secondary exciter 3 will be explained with reference to FIG. 7.

When the variable-speed generator-motor 2 (and the pump turbine 1) is in a standstill state (step S0), the controller 4 begins the starting of the variable-speed generator-motor 2 (and the pump turbine 1) in response to a starting operation (step S1).

Before the starting, the controller 4 changes at least the set value of the direct-current circuit voltage VD to a value for the starting by the secondary exciter control unit 4A (step S1).

At the time of the starting, the controller 4 enables the main circuit control unit 4B to open the parallel-in breaker 5 and close the starting disconnector 6 so that the variable-speed generator-motor 2 serves as an induction motor, and further enables the secondary exciter control unit 4A to execute the self-start control mode so that the secondary exciter 3 operates as a driver for outputting a variable frequency/variable voltage (step S2), and the variable-speed generator-motor 2 is accelerated and started up by changing the alternating output to the proximity of the system frequency from essentially 0 Hz (step S3).

The controller 4 performs start-up until the variable-speed generator-motor 2 reaches a target speed, and when the target speed is reached ("YES" in step S4), the controller 4 has the secondary exciter control unit 4A return the set value for the starting that is set at step S1 to the original value (step S5), and switches the control mode from the self-start control mode to the secondary excitation control mode (step S6).

The controller 4 enables the secondary exciter control unit 4A to open the starting disconnector 6, and then enables the secondary exciter control unit 4A to control the alternating output voltage, current, frequency, and phase of the secondary exciter 3 so that the terminal voltage of the variable-speed generator-motor 2 measured by the instrument transformer 10 is synchronized with the grid system voltage measured by the instrument transformer 9. After ascertaining the synchronization, the controller 4 enables the secondary exciter control unit 4A to close the parallel-in breaker 5 and connect the variable-speed generator-motor 2 in parallel with the grid system (step S7).

After the connection to the grid system, the controller 4 enables the secondary exciter control unit 4A to further accelerate the variable-speed generator-motor 2 as needed by the secondary exciter 3 and by the driving electricity from the grid system so that the variable-speed generator-motor 2 is started up to the variable-speed operation range. The controller 4 also enables the main circuit control unit 4B to operate the water depressing system 13 and start the pumping operation that uses the pump turbine 1 (step S8).

According to the embodiments, when a generator-motor is started by a secondary exciter, it is possible to start up the generator-motor to a target speed without increases in equipment size and costs, regardless of the higher head and higher capacity of a pumped storage power plant.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

## Claims

1. A controller (4) for performing control to supply driving electricity to a secondary winding of a variable-speed generator-motor (2) from a secondary exciter (3) and thereby start up the variable-speed generator-motor (2) and a pump turbine (1) in a variable-speed pumped storage system from a standstill state to a rotating speed that enables synchronous parallel connection to a grid system, wherein the variable-speed generator-motor (2) is a doubly-fed generator motor, the controller (4) comprising:
a setting change unit (43) configured to change, for starting the variable-speed generator-motor (2) and the pump turbine (1), at least one of a setting of a direct-current circuit voltage of the secondary exciter (3) to a value higher than a value set during an ordinary operation and settings of control or protection preset for the direct-current circuit voltage or an output voltage of the secondary exciter (3), **characterised in that**
the setting change unit (43) is configured to, for connecting the variable-speed generator-motor (2) to a grid system in parallel,
return to an original state where the setting of the direct-current circuit voltage of the secondary exciter (3) and the settings of the control or protection preset for the direct-current circuit voltage or the output voltage of the secondary exciter (3) are originally set, from a state where the at least one of the setting of the direct-current circuit voltage of the secondary exciter (3) and the settings of the control or protection preset for the direct-current circuit voltage or the output voltage of the secondary exciter (3) are changed.

2. The controller (4) according to claim 1, wherein:
the setting change unit (43) is configured to, for starting the variable-speed generator-motor (2),
change a set value of the direct-current circuit voltage of the secondary exciter (3) to a value higher than a set value which is preset and lower than a set value of a voltage level for causing a chopper (3A) of the secondary exciter (3) to operate.

3. The controller (4) according to claim 1, wherein:
the setting change unit (43) is configured to, for starting the variable-speed generator-motor (2),
change a set value which is preset as a voltage level for causing a chopper (3A) of the secondary exciter 3 to operate to a value higher than this set value and lower than a set value which is preset as a voltage level for causing a frequency converter of the secondary exciter (3) to stop, and
change a set value of the direct-current circuit voltage of the secondary exciter (3) to a value higher than a set value which is preset and lower than a voltage value of a voltage level for causing a chopper (3A) of the secondary exciter (3) to operate.

4. The controller (4) according to claim 1, wherein:
the setting change unit (43) is configured to, for starting the variable-speed generator-motor (2),
invalidate a set value which is preset as a voltage level for causing a chopper (3A) of the secondary exciter (3) to operate, and
change a set value of the direct-current circuit voltage of the secondary exciter (3) to a value higher than a set value which is preset and lower than a set value of a voltage level for causing a frequency converter of the secondary exciter (3) to stop.

5. The controller (4) according to claim 1, wherein:
the setting change unit (43) is configured to, for starting the variable-speed generator-motor (2),
invalidate a set value which is preset as a voltage level for causing a chopper (3A) of the secondary exciter (3) to operate,
change a set value which is preset as a voltage level for causing a frequency converter of the secondary exciter (3) to stop to a value higher than this set value and lower than a set value which is preset as a voltage level for causing a short-circuit device (3C) to operate to execute three-phase short-circuiting in a three-phase alternating-current circuit between a secondary winding of the variable-speed generator-motor (2) and the secondary exciter (3), and
change a set value of the direct-current circuit voltage of the secondary exciter (3) to a value higher than a set value which is preset and lower than a set value of a voltage level for causing a frequency converter of the secondary exciter (3) to stop.

6. The controller (4) according to claim 1, wherein:
the setting change unit (43) is configured to, for starting the variable-speed generator-motor (2),
invalidate a set value which is preset as a voltage level for causing a chopper (3A) of the secondary exciter (3) to operate,
change a set value which is preset as a voltage level for causing a short-circuit device (3C) to operate to execute three-phase short-circuiting in a three-phase alternating-current circuit between a secondary winding of the variable-speed generator-motor (2) and the secondary exciter (3), to a value higher than this set value and lower than an upper limit of a withstand voltage level of a secondary winding of the variable-speed generator-motor (2) and an upper limit of a withstand voltage level of a frequency converter alone of the secondary exciter (3),
change a set value which is preset as a voltage level for causing a frequency converter of the secondary exciter (3) to stop to a value higher than this set value and lower than a set value of a voltage level for causing a short-circuit device (3C) to operate to execute three-phase short-circuiting in a three-phase alternating-current circuit between a secondary winding of the variable-speed generator-motor (2) and the secondary exciter (3), and
change a set value of the direct-current circuit voltage of the secondary exciter (3) to a value higher than a set value which is preset and lower than a set value preset as a voltage level for causing a frequency converter of the secondary exciter (3) to stop.

7. A variable-speed generator-motor starting method for starting up a variable-speed generator-motor (2) and a pump turbine (1) in a variable-speed pumped storage system from a standstill state to a rotating speed that enables synchronous parallel connection to a grid system by supplying driving electricity to a secondary winding of the variable-speed generator-motor (2) from a secondary exciter (3), wherein the variable-speed generator-motor (2) is a doubly-fed generator-motor. , the method comprising:
changing, for starting the variable-speed generator-motor (2), at least one of a setting of a direct-current circuit voltage of the secondary exciter (3) to a value higher than a value set during an ordinary operation and settings of control or protection preset for the direct-current circuit voltage or an output voltage of the secondary exciter (3), by a controller (4) wherein:
for connecting the variable-speed generator-motor (2) to a grid system in parallel, the method comprises returning to an original state where the setting of the direct-current circuit voltage of the secondary exciter (3) and the settings of the control or protection preset for the direct-current circuit voltage or the output voltage of the secondary exciter (3) are originally set, from a state where the at least one of the setting of the direct-current circuit voltage of the secondary exciter (3) and the settings of the control or protection preset for the direct-current circuit voltage or the output voltage of the secondary exciter (3) are changed.

## Patentansprüche

1. Steuerung (4) zum Ausführen einer Steuerung zum Zuführen von Antriebsstrom zu einer Sekundärwicklung eines drehzahlvariablen Generatormotors (2) von einem Sekundärerreger (3) und dadurch zum Starten des drehzahlvariablen Generatormotors (2) und einer Pumpturbine (1) in einem Pumpspeichersystem mit variabler Drehzahl von einem Stillstandszustand zu einer Rotationsgeschwindigkeit, die eine synchrone Parallelschaltung mit einem Stromnetz ermöglicht, wobei der drehzahlvariable Generatormotor (2) ein doppelgespeister Generatormotor ist, wobei die Steuerung (4) umfasst:
eine Einstellungsänderungseinheit (43), die, zum Starten des drehzahlvariablen Generatormotors (2) und der Pumpturbine (1), konfiguriert ist zum Ändern mindestens einer Einstellung einer Gleichstromkreisspannung des Sekundärerregers (3) auf einen Wert, der höher ist als ein während eines normalen Betriebs eingestellter Wert, und Einstellungen von Steuer- oder Schutzvorgaben für die Gleichstromkreisspannung oder eine Ausgangsspannung des Sekundärerregers (3), **dadurch gekennzeichnet, dass**
die Einstellungsänderungseinheit (43) konfiguriert ist zum parallelen Anschließen des drehzahlvariablen Generatormotors (2) an ein Stromnetz,
Zurückkehren in einen ursprünglichen Zustand, in dem die Einstellung der Gleichstromkreisspannung des Sekundärerregers (3) und die Einstellungen der Steuer- oder Schutzvorgabe für die Gleichstromkreisspannung oder die Ausgangsspannung des Sekundärerregers (3) ursprünglich eingestellt sind, aus einem Zustand, in dem die Einstellung der Gleichstromkreisspannung des Sekundärerregers (3) und/oder die Einstellungen der Steuer- oder Schutzvorgabe für die Gleichstromkreisspannung oder die Ausgangsspannung des Sekundärerregers (3) geändert sind.

2. Steuerung (4) nach Anspruch 1, wobei:
die Einstellungsänderungseinheit (43), zum Starten des drehzahlvariablen Generatormotors (2), konfiguriert ist zum Ändern eines Einstellwerts der Gleichstromkreisspannung des Sekundärerregers (3) auf einen Wert, der höher als ein voreingestellter Einstellwert und niedriger als ein Einstellwert eines Spannungspegels ist, um einen Zerhacker (3A) des Sekundärerregers (3) in Betrieb zu setzen.

3. Steuerung (4) nach Anspruch 1, wobei:
die Einstellungsänderungseinheit (43), zum Starten des drehzahlvariablen Generatormotors (2), konfiguriert ist zum
Ändern eines Einstellwerts, der als Spannungspegel voreingestellt ist, um einen Zerhacker (3A) des Sekundärerregers (3) in Betrieb zu setzen, auf einen Wert, der höher als dieser Einstellwert und niedriger als ein Einstellwert ist, der als Spannungspegel voreingestellt ist, um einen Frequenzwandler des Sekundärerregers (3) zum Anhalten zu veranlassen, und
Ändern eines Einstellwerts der Gleichstromkreisspannung des Sekundärerregers (3) auf einen Wert, der höher als ein voreingestellter Einstellwert und niedriger als ein Spannungswert eines Spannungspegels ist, um einen Zerhacker (3A) des Sekundärerregers (3) in Betrieb zu setzen.

4. Steuerung (4) nach Anspruch 1, wobei:
die Einstellungsänderungseinheit (43), zum Starten des drehzahlvariablen Generatormotors (2), konfiguriert ist zum
Außerkraftsetzen eines Einstellwerts, der als Spannungspegel voreingestellt ist, um einen Zerhacker (3A) des Sekundärerregers (3) in Betrieb zu setzen, und
Ändern eines Einstellwerts der Gleichstromkreisspannung des Sekundärerregers (3) auf einen Wert, der höher als ein voreingestellter Einstellwert und niedriger als ein eingestellter Wert eines Spannungspegels ist, um einen Frequenzwandler des Sekundärerregers (3) zum Anhalten zu veranlassen.

5. Steuerung (4) nach Anspruch 1, wobei:
die Einstellungsänderungseinheit (43), zum Starten den drehzahlvariablen Generatormotor (2), konfiguriert ist zum
Außerkraftsetzen eines Einstellwerts, der als Spannungspegel voreingestellt ist, um einen Zerhacker (3A) des Sekundärerregers (3) in Betrieb zu setzen,
Ändern eines Einstellwerts, der als Spannungspegel zum Anhalten eines Frequenzwandlers des Sekundärerregers (3) voreingestellt ist, auf einen Wert, der höher als dieser Einstellwert und niedriger als ein Einstellwert ist, der als Spannungspegel zum Betreiben einer Kurzschlussvorrichtung (3C) voreingestellt ist, um einen Dreiphasenkurzschluss in einem Dreiphasenwechselstromkreis zwischen einer Sekundärwicklung des drehzahlvariablen Generatormotors (2) und des Sekundärerregers (3) auszuführen, und
Ändern eines Einstellwerts der Gleichstromkreisspannung des Sekundärerregers (3) auf einen Wert, der höher als ein voreingestellter Einstellwert und niedriger als ein Einstellwert eines Spannungspegels ist, um einen Frequenzwandler des Sekundärerregers (3) zum Anhalten zu veranlassen.

6. Steuerung (4) nach Anspruch 1, wobei:
die Einstellungsänderungseinheit (43), zum Starten des drehzahlvariablen Generatormotors (2), konfiguriert ist zum
Außerkraftsetzen eines Einstellwerts, der als Spannungspegel voreingestellt ist, um einen Zerhacker (3A) des Sekundärerregers (3) in Betrieb zu setzen,
Ändern eines Einstellwerts, der als Spannungspegel voreingestellt ist, um eine Kurzschlussvorrichtung (3C) in Betrieb zu setzen, um einen Dreiphasenwechselstromkreis zwischen einer Sekundärwicklung des drehzahlvariablen Generatormotors (2) und dem Sekundärerreger (3) kurzzuschließen, auf einen Wert, der höher ist als dieser Einstellwert und niedriger als eine Obergrenze eines Stehspannungspegels einer Sekundärwicklung des drehzahlvariablen Generatormotors (2) und als eine Obergrenze eines Stehspannungspegels eines Frequenzwandlers allein des Sekundärerregers (3),
Ändern eines Einstellwerts, der als Spannungspegel zum Anhalten eines Frequenzwandlers des Sekundärerregers (3) voreingestellt ist, auf einen Wert, der höher als dieser Einstellwert und niedriger als ein Einstellwert eines Spannungspegels zum Betreiben einer Kurzschlussvorrichtung (3C) ist, um einen Dreiphasenwechselstromkreis zwischen einer Sekundärwicklung des drehzahlvariablen Generatormotors (2) und des Sekundärerregers (3) kurzzuschließen, und
Ändern eines Einstellwertes der Gleichstromkreisspannung des Sekundärerregers (3) auf einen Wert, der höher ist als ein Einstellwert, der voreingestellt ist, und niedriger als ein Einstellwert, der als ein Spannungspegel voreingestellt ist, um einen Frequenzwandler des Sekundärerregers (3) zum Anhalten zu veranlassen.

7. Verfahren zum Starten eines drehzahlvariablen Generatormotors (2) und einer Pumpturbine (1) in einem Pumpspeichersystem mit variabler Drehzahl von einem Stillstandszustand zu einer Rotationsgeschwindigkeit, die eine synchrone Parallelschaltung mit einem Stromnetz ermöglicht, durch Zuführen von Antriebsstrom zu einer Sekundärwicklung des drehzahlvariablen Generatormotors (2) von einem Sekundärerreger (3), wobei der drehzahlvariable Generatormotor (2) ein doppelt gespeister Generatormotor ist, wobei das Verfahren umfasst:
Ändern, um den drehzahlvariablen Generatormotors (2) zu starten, von mindestens einer Einstellung einer Gleichstromkreisspannung des Sekundärerregers (3) auf einen Wert, der höher als ein während eines normalen Betriebs eingestellter Wert ist, und Einstellungen von Steuer- oder Schutzvorgaben für die Gleichstromkreisspannung oder eine Ausgangsspannung des Sekundärerregers (3) durch eine Steuerung (4), wobei:
zum parallelen Anschließen des drehzahlvariablen Generatormotors (2) an ein Stromnetz, das Verfahren ein Zurückkehren in einen ursprünglichen Zustand umfasst, in dem die Einstellung der Gleichstromkreisspannung des Sekundärerregers (3) und die Einstellungen der Steuer- oder Schutzvorgabe für die Gleichstromkreisspannung oder die Ausgangsspannung des Sekundärerregers (3) ursprünglich eingestellt sind, aus einem Zustand, in dem die Einstellung der Gleichstromkreisspannung des Sekundärerregers (3) und/oder die Einstellungen der Steuer- oder Schutzvorgabe für die Gleichstromkreisspannung oder die Ausgangsspannung des Sekundärerregers (3) geändert werden.

## Revendications

1. Dispositif de commande (4) pour réaliser une commande pour alimenter en électricité d'entraînement un enroulement secondaire d'un générateur-moteur à vitesse variable (2) à partir d'un excitateur secondaire (3) et ainsi démarrer le générateur-moteur à vitesse variable (2) et une turbine de pompe (1) dans un système de stockage par pompage à vitesse variable d'un état à l'arrêt jusqu'à une vitesse de rotation qui permet une connexion parallèle synchrone à un système de réseau, dans lequel le générateur-moteur à vitesse variable (2) est un générateur-moteur à double alimentation, le dispositif de commande (4) comprenant :
une unité de modification de réglage (43) configurée pour modifier, pour démarrer le générateur-moteur à vitesse variable (2) et la turbine de pompe (1), au moins l'un parmi un réglage d'une tension de circuit à courant continu de l'excitateur secondaire (3) à une valeur supérieure à une valeur réglée pendant un fonctionnement ordinaire et des réglages de commande ou de protection préréglés pour la tension de circuit à courant continu ou une tension de sortie de l'excitateur secondaire (3), **caractérisé en ce que**
l'unité de modification de réglage (43) est configurée pour, pour connecter le générateur-moteur à vitesse variable (2) à un système de réseau en parallèle,
revenir à un état d'origine où le réglage de la tension de circuit à courant continu de l'excitateur secondaire (3) et les réglages de la commande ou la protection préréglés pour la tension de circuit à courant continu ou la tension de sortie de l'excitateur secondaire (3) sont réglés à l'origine, d'un état où l'au moins un parmi le réglage de la tension de circuit à courant continu de l'excitateur secondaire (3) et les réglages de la commande ou la protection préréglés pour la tension de circuit à courant continu ou la tension de sortie de l'excitateur secondaire (3) sont modifiés.

2. Dispositif de commande (4) selon la revendication 1, dans lequel :
l'unité de modification de réglage (43) est configurée pour, pour démarrer le générateur-moteur à vitesse variable (2),
modifier une valeur réglée de la tension de circuit à courant continu de l'excitateur secondaire (3) à une valeur supérieure à une valeur réglée qui est préréglée et inférieure à une valeur réglée d'un niveau de tension pour amener un hacheur (3A) de l'excitateur secondaire (3) à fonctionner.

3. Dispositif de commande (4) selon la revendication 1, dans lequel :
l'unité de modification de réglage (43) est configurée pour, pour démarrer le générateur-moteur à vitesse variable (2),
modifier une valeur réglée qui est préréglée en tant que niveau de tension pour amener un hacheur (3A) d'un excitateur secondaire (3) à fonctionner à une valeur supérieure à cette valeur réglée et inférieure à une valeur réglée qui est préréglée en tant que niveau de tension pour amener un convertisseur de fréquence de l'excitateur secondaire (3) à s'arrêter, et
modifier une valeur réglée de la tension de circuit à courant continu de l'excitateur secondaire (3) à une valeur supérieure à une valeur réglée qui est préréglée et inférieure à une valeur de tension d'un niveau de tension pour amener un hacheur (3A) de l'excitateur secondaire (3) à fonctionner.

4. Dispositif de commande (4) selon la revendication 1, dans lequel :
l'unité de modification de réglage (43) est configurée pour, pour démarrer le générateur-moteur à vitesse variable (2),
invalider une valeur réglée qui est préréglée en tant que niveau de tension pour amener un hacheur (3A) de l'excitateur secondaire (3) à fonctionner, et
modifier une valeur réglée de la tension de circuit à courant continu de l'excitateur secondaire (3) à une valeur supérieure à une valeur réglée qui est préréglée et inférieure à une valeur réglée d'un niveau de tension pour amener un convertisseur de fréquence de l'excitateur secondaire (3) à s'arrêter.

5. Dispositif de commande (4) selon la revendication 1, dans lequel :
l'unité de modification de réglage (43) est configurée pour, pour démarrer le générateur-moteur à vitesse variable (2),
invalider une valeur réglée qui est préréglée en tant que niveau de tension pour amener un hacheur (3A) de l'excitateur secondaire (3) à fonctionner,
modifier une valeur réglée qui est préréglée en tant que niveau de tension pour amener un convertisseur de fréquence de l'excitateur secondaire (3) à s'arrêter à une valeur supérieure à cette valeur réglée et inférieure à une valeur réglée qui est préréglée en tant que niveau de tension pour amener un dispositif de court-circuit (3C) à fonctionner pour exécuter un court-circuit triphasé dans un circuit à courant alternatif triphasé entre un enroulement secondaire du générateur-moteur à vitesse variable (2) et l'excitateur secondaire (3), et
modifier une valeur réglée de la tension de circuit à courant continu de l'excitateur secondaire (3) à une valeur supérieure à une valeur réglée qui est préréglée et inférieure à une valeur réglée d'un niveau de tension pour amener un convertisseur de fréquence de l'excitateur secondaire (3) à s'arrêter.

6. Dispositif de commande (4) selon la revendication 1, dans lequel :
l'unité de modification de réglage (43) est configurée pour, pour démarrer le générateur-moteur à vitesse variable (2),
invalider une valeur réglée qui est préréglée en tant que niveau de tension pour amener un hacheur (3A) de l'excitateur secondaire (3) à fonctionner,
modifier une valeur réglée qui est préréglée en tant que niveau de tension pour amener un dispositif de court-circuit (3C) à fonctionner pour exécuter un court-circuit triphasé dans un circuit à courant alternatif triphasé entre un enroulement secondaire du générateur-moteur à vitesse variable (2) et l'excitateur secondaire (3), à une valeur supérieure à cette valeur réglée et inférieure à une limite supérieure d'un niveau de tension de résistance d'un enroulement secondaire du générateur-moteur à vitesse variable (2) et une limite supérieure d'un niveau de tension de résistance d'un convertisseur de fréquence seul de l'excitateur secondaire (3),
modifier une valeur réglée qui est préréglée en tant que niveau de tension pour amener un convertisseur de fréquence de l'excitateur secondaire (3) à s'arrêter à une valeur supérieure à cette valeur réglée et inférieure à une valeur réglée d'un niveau de tension pour amener un dispositif de court-circuit (3C) à fonctionner pour exécuter un court-circuit triphasé dans un circuit à courant alternatif triphasé entre un enroulement secondaire du générateur-moteur à vitesse variable (2) et l'excitateur secondaire (3), et
modifier une valeur réglée de la tension de circuit à courant continu de l'excitateur secondaire (3) à une valeur supérieure à une valeur réglée qui est préréglée et inférieure à une valeur réglée en tant que niveau de tension pour amener un convertisseur de fréquence de l'excitateur secondaire (3) à s'arrêter.

7. Procédé de démarrage de générateur-moteur à vitesse variable pour démarrer un générateur-moteur à vitesse variable (2) et une turbine de pompe (1) dans un système de stockage par pompage à vitesse variable d'un état à l'arrêt jusqu'à une vitesse de rotation qui permet une connexion parallèle synchrone à un système de réseau en alimentant en électricité d'entraînement un enroulement secondaire du générateur-moteur à vitesse variable (2) à partir d'un excitateur secondaire (3), dans lequel le générateur-moteur à vitesse variable (2) est un générateur-moteur à double alimentation, le procédé comprenant :
la modification, pour démarrer le générateur-moteur à vitesse variable (2), d'au moins un parmi un réglage d'une tension de circuit à courant continu de l'excitateur secondaire (3) à une valeur supérieure à une valeur réglée pendant un fonctionnement ordinaire et des réglages de commande ou de protection préréglés pour la tension de circuit à courant continu ou une tension de sortie de l'excitateur secondaire (3), par un dispositif de commande (4) dans lequel :
pour connecter le générateur-moteur à vitesse variable (2) à un système de réseau en parallèle, le procédé comprend le retour à un état d'origine où le réglage de la tension de circuit à courant continu de l'excitateur secondaire (3) et les réglages de la commande ou la protection préréglés pour la tension de circuit à courant continu ou la tension de sortie de l'excitateur secondaire (3) sont réglés à l'origine, d'un état où l'au moins un parmi le réglage de la tension de circuit à courant continu de l'excitateur secondaire (3) et les réglages de la commande ou de la protection préréglés pour la tension de circuit à courant continu ou la tension de sortie de l'excitateur secondaire (3) sont modifiés.
